# NEUE EUROPÄISCHE PATENTSCHRIFT

(11) **EP 1 042 758 B2**
(45) Veröffentlichungstag und Bekanntmachung des Hinweises auf die Entscheidung über den Einspruch: **12.09.2007**
(45) Hinweis auf die Patenterteilung: 23.07.2003
(21) Anmeldenummer: 99952557.9
(22) Anmeldetag: 13.10.1999
(51) Int. Cl.: H01B 3/04, H02K 3/30

(54) **VERFAHREN ZUR HERSTELLUNG VON GLIMMER-HÄLTIGEN ISOLIERBÄNDERN SOWIE DEREN VERWENDUNG**
METHOD FOR PRODUCING INSULATING TAPES CONTAINING MICA, AND THE UTILIZATION THEREOF
PROCEDE DE PRODUCTION DE RUBANS ISOLANTS CONTENANT DU MICA, ET UTILISATION DE CES RUBANS

(30) Priorität: 16.10.1998 EP 98890304
(43) Veröffentlichungstag der Anmeldung: 11.10.2000
(73) Patentinhaber: ISOVOLTA AG, 2355 Wiener Neudorf (AT)
(72) Erfinder: GSELLMANN, Helmut, A-8010 Graz (AT)
(74) Vertreter: Dungler, Karin
(86) Internationale Anmeldenummer: PCT/EP1999/007669
(87) Internationale Veröffentlichungsnummer: WO 2000/024007

(56) Entgegenhaltungen:
- EP-A- 0 031 555
- EP-A- 0 194 974
- DE-A- 2 142 571
- DE-A- 19 640 964
- FR-A- 2 095 942
- JP-A- 53 074 300
- US-A- 4 180 434
- US-A- 4 418 241
- DATABASE WPI Section Ch, Week 199945 Derwent Publications Ltd., London, GB; Class A21, AN 1999-536071 XP002129237 & JP 11 234934 A (TOSHIBA KK), 27. August 1999 (1999-08-27)
- DATABASE WPI Section Ch, Week 198505 Derwent Publications Ltd., London, GB; Class F09, AN 1985-028422 XP002129238 & JP 59 223400 A (KOIZUMI H), 15. Dezember 1984 (1984-12-15)
- DATABASE WPI Section Ch, Week 198237 Derwent Publications Ltd., London, GB; Class A85, AN 1982-77450E XP002129239 & JP 57 126006 A (MITSUBISHI ELECTRIC CORP), 5. August 1982 (1982-08-05)
- Ciba-Geigy AG, Produktinformation Einkomponenten Impraegnierharzsystem, HARZ XD 4150, September 1982
- Proceedings of INSUCON/ISOTEC'98, the 8th BEAMA International Electrical Insulation, Conference and Exhibition, 1998, S.78-86

## Beschreibung

Die Erfindung betrifft ein Verfahren zur Herstellung von Glimmer-hältigen Isolierbändern für Wicklungselemente von rotierenden elektrischen Hochspannungsmaschinen, welche nach dem Wickeln unter Vakuum und Druck mit einem Lösungsmittel-freien Kunstharz imprägnierbar und anschließend unter Wärmeeinwirkung aushärtbar sind, sowie deren Verwendung in der Hauptisolation von rotierenden elektrischen Hochspannungsmaschinen.

### Stand der Technik

Zur Isolierung von Wicklungselementen in rotierenden elektrischen Hochspannungsmaschinen hat sich in den letzten Jahren die Tränktechnik auf Basis einer Vakuum-Druckimprägnierung stark durchgesetzt. Dabei werden die Wicklungselemente aus konstruktionstechnischen Gründen entweder als Formspulen oder Leiterstäbe, vorzugsweise Röbelstäbe, ausgebildet. Diese Wicklungselemente werden mit einer Glimmer-hältigen Hauptisolation versehen und im Vakuum-Druckimprägnierverfahren weiterbehandelt. Dabei werden als Imprägnierharze Epoxidharze, vorzugsweise niedrigviskose Lösungsmittel-freie Harzsysteme eingesetzt.

Diese durchtränken nun im Vakuum und unter Druck die aus mehreren Wicklungslagen gebildete, Glimmer-hältige Hauptisolation, sodaß Hohlräume, welche zwischen den Wicklungslagen Teilentladungen hervorrufen können, vollständig ausgefüllt werden, sodaß nach Aushärtung des Imprägnierharzes eine elektrisch und mechanisch stabile Isolationshülse gebildet wird.

Die Wicklungslagen der Hauptisolation werden durch Glimmer-hältige Isolierbänder ausgebildet. Diese werden derart hergestellt, daß eine Glimmerfolie mit einem porösen Trägermaterial unter Verwendung eines Bindemittels verklebt wird. Dieses poröse Glimmer-hältige Isolierband hat die Aufgabe, das vorgenannte Imprägnierharz unter Vakuum und Druck in größtmöglichem Ausmaß aufzunehmen.

Vor allem im Generatorenbau entstand in den letzten Jahren zunehmend der Bedarf nach Glimmer-hältigen Isolierbändern, die neben sehr guter Verarbeitbarkeit auf modernen Wickelmaschinen auch über eine zufriedenstellende Imprägnierbarkeit verfügen sollen, da durch die zunehmende Baugröße und Leistung von Generatoren ebenso hohe Isolationswandstärken notwendig wurden.

Bekannte Isolierbänder können dieses Erfordernis nur teilweise erfüllen, da diese aufgrund ihrer physikalischen sowie chemischen Konstitution gegenüber dem eindringenden Imprägnierharz eher als Barriere wirken, sodaß bei längeren Imprägnierzeiten die Imprägniertiefe, das heißt die Anzahl an imprägnierten Wicklungslagen für hohe Isolationswandstärken, unzureichend ist.

### Darstellung der Erfindung

Aufgabe der vorliegenden Erfindung ist es daher, ein Glimmer-hältiges Isolierband der eingangs genannten Art anzugeben, welches neben sehr guten Wickeleigenschaften auf modernen Wickelautomaten auch ein wesentlich verbessertes Imprägnierverhalten während der Vakuum-Druckimprägnierung zeigt. Zusätzlich soll dieses glimmerhältige Isolierband leicht herstellbar sowie lagerstabil sein.

Erfindungsgemäß wird daher vorgeschlagen, dieses Glimmer-hältige Isolierband derart herzustellen, daß eine Faser-hältige Glimmerfolie, welche neben Feinglimmer zusätzlich organische und/oder anorganische Fasern aufweist, mit einer Epoxidharzmischung in Form eines Pulverlackes welche zusätzlich einem Härter enthält, bestreut wird und daß die mit dem Pulverlack bestreute Seite der Faser-hältigen Glimmerfolie unter Druck und erhöhter Temperatur mit einem Trägermaterial verklebt wird.

Vorzugsweise besteht dieses Trägermaterial aus einem Glasgewebe, einem Vlies oder einer Kunststofffolie.

Durch das Einbringen von Fasern in die Glimmerfolie wird diese poröser, sodaß dessen Kapillarwirkung gegenüber dem Imprägnierharz während der Vakuum-Druckimprägnierung erhöht wird. Die daraus resultierenden Vorteile sind kürzere Imprägnierzeiten sowie das Imprägnieren mit höher viskosen Harzen, um auch sehr hohe Isolationswandstärken gänzlich mit Imprägnierharz durchtränken zu können.

Ferner wählt man vorzugsweise einen Fasergehalt, der zwischen mindestens 3 und maximal 50 Gew.%, bezogen auf 100 Gew% Faser-hältige Glimmerfolie, liegt. Ein Faseranteil, der unter 3 Gew.% liegt, trägt zu keiner Verbesserung der Imprägnierbarkeit bei; ein Faseranteil über 50 Gew% verringert sogar die elektrische Festigkeit des Glimmer-hältigen Isolierbandes.

Weitere Vorteile des erfindungsgemäßen Verfahrens bestehen darin, daß die organischen und/oder anorganischen Fasern in der Faser-hältigen Glimmerfolie einen durchschnittlichen Durchmesser von 0,1 bis 20 µm und eine durchschnittliche Länge von 0,5 bis 10 mm aufweisen.

Erfindungsgemäß werden ferner die organischen Fasern aus der Gruppe der aromatischen Polyamide oder der aromatischen Polyester wie Polyethylenterephthalat und die anorganischen Fasern aus der Gruppe E-Glas, S-Glas, Siliciumglas und Aluminium ausgewählt.

Gemäß einer weiteren Variante des erfindungsgemäßen Verfahrens weist die Faser-hältige Glimmerfolie einen auf das Lösungsmittel-freie Kunstharz wirkenden Härtungsbeschleuniger, vorzugsweise Zinknaphthenat, auf.

Zusätzlich enthält die pulverförmige Epoxidharzmischung einen Härter, vorzugsweise einen aminischen Härter.

Gemäß dem erfindungsgemäßen Verfahren weist die in Form eines Pulverlackes eingesetzte Epoxidharzmischung einen Erweichungspunkt über 85 ° C auf.

Die Erfindung betrifft ferner die Verwendung eines nach den oben genannten Verfahrensvarianten hergestellten, Glimmer-hältigen Isolierbandes als Hauptisolation in rotierenden elektrischen Hochspannungsmaschinen, wobei das Glimmer-hältige Isolierband in mehreren Lagen um ein Wicklungselement gewickelt und anschließend unter Vakuum und Druck mit einem Lösungsmittel-freien Kunstharz imprägniert wird.

Ferner werden bei der vorgenannten Vakuum-Druckimprägnierung vorzugsweise Lösungsmittel-freie Kunstharze wie z.B. Epoxid-Säureanhydridmischungen auf Basis von Bisphenol-A oder Bisphenol-F-Epoxidharzen eingesetzt.

Epoxidharz-Säureanhydridsysteme werden üblicherweise auf 60 ° - 70 °C erwärmt, um eine für den Imprägniervorgang ausreichend niedrige Viskosität zu haben. Nach dem erfindungsgemäßen Verfahren hergestellte, Glimmer-hältige Isolierbänder lassen sich jedoch schon bei wesentlich höherer Harzviskosität zufriedenstellend durchimprägnieren und eignen sich daher besonders gut für die Imprägnierung mit Harzen, die nur bis etwa 30 °C erwärmt werden können und daher eine meist sehr hohe Imprägnierviskosität aufweisen, wie z.B. Polyesterharze mit Styrol oder Vinylalkohol als Monomer.

### Ein Weg zur Ausführung der Erfindung

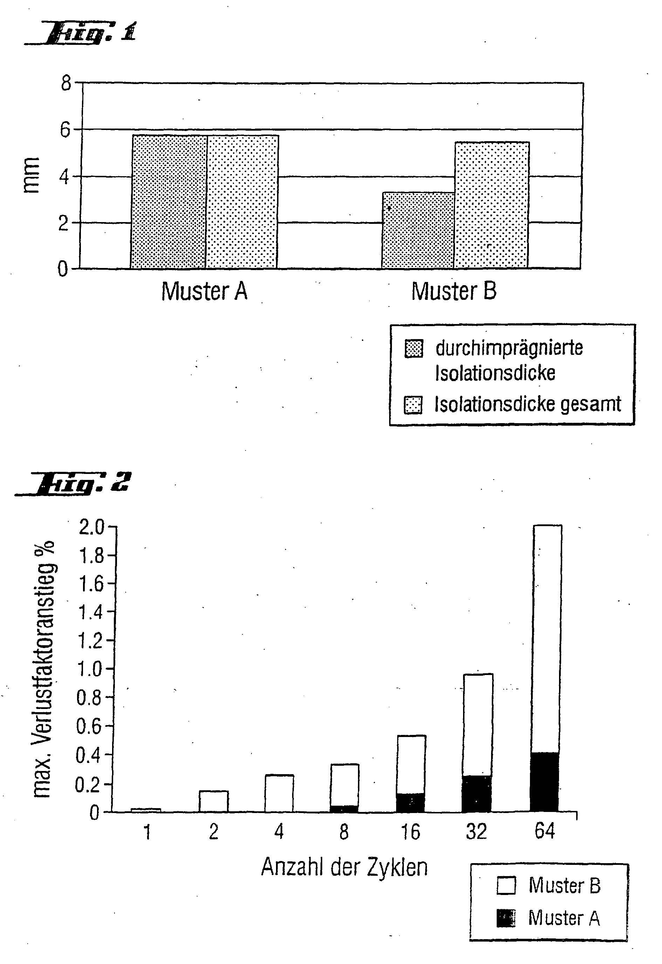

Die Erfindung wird nun anhand von Ausführungsbeispielen sowie den anhand der Ausführungsbeispiele erstellten Diagrammen gemäß Figuren 1 und 2 näher erläutert.

### Beispiel 1

Eine Faser-hältige Glimmerfolie mit einem Gewicht von 160 g/m², bestehend aus einer Mischung aus unkalziniertern Muskovit oder Phlogopit und 5 Gew% alkalifreien E-Glas-Kurzfasern, die einen Durchmesser von durchschnittlich 8 µm und eine Faserlänge von etwa 3 mm aufweisen, wird mit einer Lösung von Zinknaphthenat in Methylethylketon imprägniert und das Lösungsmittel abgedampft. Die mit ca. 4 g/m² Zinknaphthenat vorimprägnierte Faser-hältige Glimmerfolie wird mit einer pulverförmigen Epoxidharzmischung mit einem Erweichungspunkt von ≥ 85 °C bestreut und mittels eines beheizbaren Kalanders unter Druck und Wärmeeinwirkung mit dem Trägermaterial verklebt. Zur Lösung der der Erfindung Zugrundsliegenden Aufgabe hinsichtlich Erzielung besonders zufriedenstellender Imprägnierwerte während der Vakuum-Druckimprägnierung wird der Epoxidharzmischung zusätzlich ein Härter, vorzugsweise ein aminischer Härter, zugesetzt.

Als Trägermaterial wird
a) ein Glasgewebe mit einem Flächengewicht von 23 g/m² eingesetzt, das mit 2 g/m² eines flexibel vernetzenden Acrylharzes beschichtet und anschließend zum Aushärten des Acrylharzes in einem Ofen bei 100 °C getempert wird, oder
b) ein Glasgewebe mit einem Flächengewicht von 23 g/m² eingesetzt, das mit 0,5 g/m² Zinknaphthenat beschichtet wird, oder
c) ein Polyestervlies mit einem Flächengewicht von 20 g/m² oder
d) eine Polyesterfolie mit einem Flächengewicht von 42 g/m²
eingesetzt.

### Beispiel 2(Vergleichsbeispiel)

Eine Faser-hältige Glimmerfolie, mit einem Gewicht von 160 g/m², bestehend aus einer Mischung aus unkalziniertem Muskovit oder Phlogopit und 5 Gew% alkalifreien E-Glas-Kurzfasern, die einen Durchmesser von durchschnittlich 8 µm und eine Faserlänge von etwa 3 mm aufweisen, wird mit einer Lösung einer Epoxidharzmischung in Methylethylketon vorimprägniert. Nach dem Abdampfen des Lösungsmittels verbleiben etwa 4 g/m² Epoxidharz in der Faser-hältigen Glimmerfolie. Durch diese Maßnahme wird das Ablösen von Glimmerschuppen bei der weiteren Verarbeitung verhindert, sodaß die Faser-hältige Glimmerfolie widerstandsfähiger gegenüber mechanischer Belastung wird.

Die so vorimprägnierte Glimmerfolie wird mit einer pulverförmigen Epoxidharzmischung mit einem Erweichungspunkt von ≥ 85 °C bestreut. Die derart bestreute faserhältige Glimmerfolie wird anschließend mittels eines beheizbaren Kalanders unter Druck und Wärmeeinwirkung mit dem Trägermaterial verklebt.

Als Trägermaterial wird
a) ein Glasgewebe mit einem Flächengewicht von 23 g/m², das mit 2 g/m² eines flexibel vernetzenden Acrylharzes beschichtet ist, welches zum Aushärten in einem Ofen bei 100 °C getempert wird, oder
b) ein Polyestervlies mit einem Flächengewicht von 20 g/m² oder
c) eine Polyesterfolie mit einem Flächengewicht von 42 g/m²
eingesetzt.

Die Vorteile eines nach dem erfindungsgemäßen Verfahren hergestellten Glimmer-hältigen Isolierbandes lassen sich anhand der Anzahl durchimprägnierter Lagen während der Vakuum-Druckimprägnierung im Vergleich mit bekannten Glimmer-hältigen Isolierbändern sehr gut darstellen.

Zu diesem Zweck werden Profilstäbe mit jeweils 20 Lagen an Glimmer-hältigem Isolierband halbüberlappt bewickelt, die Stirnseiten der Isolation mit Harz vergossen und die so hergestellten Modellstäbe, welche ein Wicklungselement in Form eines Leiterstabes simulieren, mit einem Lösungsmittel-freien Epoxid-Säureanhydrid-Im-prägnierharz bei 60 °C drei

Stunden imprägniert. Nach dem Aushärten werden die Modellstäbe quer geschnitten, um die Imprägniertiefe messen zu können.

Auf diese Weise werden ein glimmerhältiges Isolierband, hergestellt nach dem erfindungsgemäßen Verfahren gemäß Beispiel la) (Muster A) bzw. ein im Aufbau vergleichbares, bekanntes glimmerhältiges Isolierband, jedoch ohne Zusatz von Fasern, (Muster B) verwendet.

Die Ergebnisse werden in den Diagrammen gemäß Figur 1 und 2 dargestellt.

Aus dem Diagramm gemäß Figur 1 ist zu ersehen, daß bei der Verwendung des erfindungsgemäß hergestellten, Glimmer-hältigen Isolierbandes A die Isolationsdicke, d.h. die Dicke der 20 Lagen, insgesamt durchimprägniert ist, während bei bekannten Isolierbändern B ohne Zusatz von Fasern lediglich etwa zwei Drittel der Isolationsdicke imprägniert sind. Daraus ergeben sich zwangsläufig Hohlräume zwischen den einzelnen Lagen, welche zu Teilentladungen und damit zum Ausfall des Isolationssystems führen.

In einem weiteren Versuch werden Profilstäbe mit jeweils 10 Lagen an Glimmer-hältigem Isolierband halb überlappt bewickelt, die Stirnseiten der Isolation mit Harz vergossen, sodaß die Modellstäbe, welche ein Wicklungselement in Form eines Leiterstabes simulieren, hergestellt werden. Als Glimmer-hältige Isolierbänder werden ein gemäß Beispiel 1a, des erfindungsgemäßen Verfahrens hergestelltes Muster A und ein glimmerhältiges Isolierband nach dem Stand der Technik (Muster B), jedoch ohne Faserzusatz, verwendet.

Anschließend werden die gehärteten, mit Muster A beziehungsweise Muster B versehenen Modellstäbe einem thermischen Alterungszyklus unterzogen, wobei ein Zyklus das Erwärmen der Stäbe auf 155 °C über 16 Stunden und eine nachfolgende Abkühlung auf Raumtemperatur bedeutet. Nach jedem Zyklus wird der Verlustfaktorwert (tg δ) als Funktion der Spannung gemessen. Der daraus resultierende maximale Anstieg (Δ tgδ max) gibt den optischen und mechanischen Zustand der Isolierung nach jedem Zyklus wieder. Höhere Anstiegswerte bedeuten ein früheres "Aufgehen" der Isolation, das in weiterer Folge zu einem elektrischen Durchschlag und somit zum Ausfall der Isolierung führt.

Im Diagramm gemäß Figur 2 ist die Anzahl der thermischen Alterungszyklen gegen den maximalen Verlustfaktoranstieg (tgδ max in %) dargestellt.

Daraus ist zu ersehen, daß das Glimmer-hältige Isolierband ohne Zusatz von Fasern (Muster B) schon nach wenigen Alterungszyklen einen höhreren maximalen Verlustfaktoranstieg als das vergleichsweise dargestellte Muster A zeigt, welches nach dem erfindungsgemäßen Verfahren hergestellt wurde, was auch auf ein sehr rasches Delaminieren der Isolation schließen läßt.

### Gewerbliche Anwendbarkeit

Faser- und Glimmer-hältige Isolierbänder, wie sie erfindungsgemäß hergestellt werden, zeigen bei deren Verwendung in Form von Wicklungselementen, wie Leiterstäben ein äußerst zufriedenstellendes Langzeitverhalten, auch nach mehreren thermischen Alterungszyklen, sowie eine äußerst geringe Neigung zur Delamination.

## Patentansprüche

1. Verfahren zur Herstellung von Glimmerhältigen Isolierbändern für Wicklungen von rotierenden elektrischen Hochspannungsmaschinen, welche nach dem Wickeln unter Vakuum und Druck mit einem Lösungsmittel-freien Kunstharz imprägnierbar und anschließend unter Wärmeeinwirkung aushärtbar sind, **dadurch gekennzeichnet, daß** eine Faser-hältige Glimmerfolie, welche neben Feinglimmer zusätzlich organische und/oder anorganische Fasern aufweist, mit einer Epoxidharzmischung in Form eines Pulverlackes, welcher zusätzlich einen Härter enthält, bestreut wird und daß die mit dem Pulverlack bestreute Seite der Faser-hältigen Glimmerfolie unter Druck und erhöhter Temperatur mit einem Trägermaterial verklebt wird.

2. Verfahren nach Anspruch 1, **dadurch gekennzeichnet, daß** das Trägermaterial ein Glasgewebe, ein Vlies oder eine Kunststofffolie ist.

3. Verfahren nach Anspruch 1 oder 2, **dadurch gekennzeichnet, daß** die organischen und/oder anorganischen Fasern in der faserhältigen Glimmerfolie einen durchschnittlichen Durchmesser von 0,1 bis 20 µm aufweisen.

4. Verfahren nach einem der Ansprüche 1 bis 3, **dadurch gekennzeichnet, daß** die organischen und/oder anorganischen Fasern in der faserhältigen Glimmerfolie eine durchschnittliche Länge von 0,5 bis 10 mm aufweisen.

5. Verfahren nach einem der Ansprüche 1 bis 4, **dadurch gekennzeichnet, daß** der Faseranteil in der faserhältigen Glimmerfolie 3 bis 50 Gew% aufweist.

6. Verfahren nach einem der Ansprüche 1 bis 5, **dadurch gekennzeichnet, daß** die organischen Fasern aus der Gruppe der aromatischen Polyamide oder der aromatischen Polyester wie Polyethylenterephthalat ausgewählt werden.

7. Verfahren nach einem der Ansprüche 1 bis 6, **dadurch gekennzeichnet, daß** die anorganischen Fasern aus der Gruppe E-Glas, S-Glas, Siliciumglas und Aluminium ausgewählt werden.

8. Verfahren nach einem der Ansprüche 1 bis 7, **dadurch gekennzeichnet, daß** die Faser-hältige Glimmerfolie einen auf das Lösungsmittel-freie Kunstharz wirkenden Härtungsbeschleuniger, vorzugsweise Zinknaphthenat, aufweist.

9. Verfahren nach einem der Ansprüche 1 bis 7, **dadurch gekennzeichnet, daß** der Pulverlack auf Basis einer Epoxidharzmischung als Härter einen aminischen Härter enthält.

10. Verfahren nach einem der Ansprüche 1 bis 9, **dadurch gekennzeichnet, daß** die in Form eines Pulverlackes eingesetzte Epoxidharzmischung einen Erweichungspunkt von > 85 °C aufweist.

11. Verwendung eines nach einem der Ansprüche 1 bis 10 hergestellten Glimmer-hältigen Isolierbandes als Hauptisolation in rotierenden, elektrischen Hochspannungsmaschinen, wobei das Glimmer-hältige Isolierband in mehreren Lagen um ein Wicklungselement gewickelt und anschließend unter Vakuum und Druck mit einem Lösungsmittel-freien Kunstharz imprägniert wird.

12. Verwendung nach Anspruch 11, **dadurch gekennzeichnet, daß** das Lösungsmittel-freie Kunstharz aus einer Epoxidharz-Säureanhydridmischung, vorzugsweise auf Basis von Bisphenol-A oder Bisphenol-F-Epoxidharzen, besteht.

## Claims

1. Method of manufacturing insulating tapes containing mica for windings of rotating electric high-voltage machines, which tapes, after having been wound on, can be impregnated under vacuum and pressure with a solvent-free synthetic resin and can then be cured with the action of heat, **characterised in that** a fibre-containing mica foil, which in addition to fine mica also has organic and/or inorganic fibres, is sprinkled with an epoxy resin mixture in the form of a coating powder which in addition contains a curing agent, and **in that** the side of the fibre-containing mica foil which is sprinkled with the coating powder is glued to a substrate under pressure and at an elevated temperature.

2. Method according to claim 1, **characterised in that** the substrate is a glass cloth, a fleece or a plastic film.

3. Method according to claim 1 or 2, **characterised in that** the organic and/or inorganic fibres in the fibre-containing mica foil have an average diameter of 0.1 to 20 µm.

4. Method according to one of claims 1 to 3, **characterised in that** the organic and/or inorganic fibres in the fibre-containing mica foil have an average length of 0.5 to 10 mm.

5. Method according to one of claims 1 to 4, **characterised in that** the proportion of fibre in the fibre-containing mica foil is 3 to 50% by weight.

6. Method according to one of claims 1 to 5, **characterised in that** the organic fibres are selected from the group of aromatic polyamides or aromatic polyesters such as polyethylene terephthalate.

7. Method according to one of claims 1 to 6, **characterised in that** the inorganic fibres are selected from the group comprising E-glass, S-glass, silicon glass and aluminium.

8. Method according to one of claims 1 to 7, **characterised in that** the fibre-containing mica foil has a curing accelerator, preferably zinc naphthenate, which acts upon the solvent-free synthetic resin.

9. Method according to one of claims 1 to 7, **characterised in that** the coating powder based on an epoxy resin mixture contains an amine curing agent as curing agent.

10. Method according to one of claims 1 to 9, **characterised in that** the epoxy resin mixture which is used in the form of a coating powder has a softening point of > 85°C.

11. Use of an insulating tape containing mica and produced according to one of claims 1 to 10 as the main insulation in rotating electric high-voltage machines, the mica-containing insulating tape being wound in a plurality of layers around a winding element and being then impregnated with a solvent-free synthetic resin under vacuum and pressure.

12. Use according to claim 11, **characterised in that** the solvent-free synthetic resin comprises an epoxy resin acid anhydride mixture, preferably based on bisphenol A or bisphenol F epoxy resins.

## Revendications

1. Procédé de fabrication de rubans isolants contenant du mica pour des bobinages de machines tournantes électriques à haute tension qui, après enroulement, peuvent être imprégnés sous vide et en présence d'une pression d'une résine synthétique sans solvant, puis durcis sous l'action de chaleur, **caractérisé en ce qu'**une feuille de mica à base de fibres qui, en plus du mica fin, contient des fibres organiques et/ou inorganiques, est saupoudrée d'un mélange de résine époxy sous la forme d'un vernis en poudre contenant en outre un durcisseur et **en ce que** la face de la feuille de mica à base de fibres saupoudrée de vernis en poudre est collée à un matériau support sous l'action d'une pression et de la chaleur.

2. Procédé selon la revendication 1, **caractérisé en ce que** le matériau support est un tissu de verre, un produit non-tissé ou un film de matière plastique.

3. Procédé selon la revendication 1 ou 2, **caractérisé en ce que** les fibres organiques et/ou inorganiques dans la feuille de mica à base de fibres, présentent un diamètre moyen allant de 0,1 à 20 µm.

4. Procédé selon une des revendications 1 à 3, **caractérisé en ce que** les fibres organiques et/ou inorganiques dans la feuille de mica à base de fibres, présentent une longueur moyenne allant de 0,5 à 10 mm.

5. Procédé selon une des revendications 1 à 4, **caractérisé en ce que** la part de fibres organiques et/ou inorganiques dans la feuille de mica à base de fibres représente de 3 à 50% en poids.

6. Procédé selon une des revendications 1 à 5, **caractérisé en ce que** les fibres organiques sont sélectionnées parmi le groupe des polyamides aromatiques ou des polyesters aromatiques comme le téréphtalate de polyéthylène.

7. Procédé selon une des revendications 1 à 6, **caractérisé en ce que** les fibres inorganiques sont sélectionnées parmi le groupe comprenant le verre E, le verre S, le verre de silice et l'aluminium

8. Procédé selon une des revendications 1 à 7, **caractérisé en ce que** la feuille de mica à base de fibres comporte un accélérateur de durcissement, de préférence du naphténate de zinc, qui agit sur la résine synthétique sans solvant.

9. Procédé selon une des revendications 1 à 7, **caractérisé en ce que** le vernis en poudre à base d'un mélange de résine époxy contient, comme durcisseur, un durcisseur amine.

10. Procédé selon une des revendications 1 à 9, **caractérisé en ce que** le mélange de résine époxy utilisé sous la forme d'un vernis en poudre présente un point de ramollissement > 85 °C.

11. Utilisation d'un ruban isolant contenant du mica fabriqué conformément à l'une des revendications 1 à 10, en tant qu'isolation principale dans des machines tournantes électriques à haute tension, le ruban isolant contenant du mica étant enroulé en plusieurs couches autour d'un élément de bobinage et étant ensuite imprégné sous vide et en présence d'une pression avec une résine synthétique sans solvant.

12. Utilisation selon la revendication 11, **caractérisée en ce que** la résine synthétique sans solvant est formée d'un mélange résine époxy anhydride d'acide, de préférence à base de résines époxy-bisphénol-A ou époxy-bisphénol-F.
